# EUROPEAN PATENT APPLICATION

(11) **EP 4 209 293 A1**
(43) Date of publication of application: **12.07.2023**
(21) Application number: 22150398.0
(22) Date of filing: 06.01.2022
(51) Int. Cl.: B22F 7/06, C22C 1/04, C22C 19/05, C23C 30/00, F01D 5/28, C22C 1/02, C22C 19/03, C22C 30/00, C23C 4/073, C23C 28/00, C22C 1/05

(54) **MCRALX-ALLOY, POWDER, COATING FOR PROTECTION AGAINST CORROSION AND OXIDATION AND FOR BONDING CERAMIC INSULATING COATING AND COMPONENT**

(71) Applicant: Siemens Energy Global GmbH & Co. KG, 81739 München (DE)
(72) Inventor: Li, Xin-Hai, 58272 Linköping (SE); Djordjevic, Snezana, 602 42 Norrköping (SE)

(57) **Abstract**

A Ni based NiCoCrAlY coating comprising:
Cobalt (Co) 24.5% - 26.5%
Chrome (Cr) 14.5% - 16.5%Cr
Aluminum (Al) 11.6% - 12.6%
Yttrium (Y) 0.3% - 0.5%
Iron (Fe) 4.0% - 5.0%
Tantalum (Ta) 0.6% - 0.8%
Molybdenum (Mo) 0.4% - 0.6%
Silicon (Si) 0.4% - 0.6%.

## Description

The invention relates to a MCrAlX-alloy as a Nickel-based alloy, a powder, a coating for protection against corrosion and oxidation and a component.

When further increasing engine efficiency, output power, availability, and reliability in the current gas turbine development, it is often limited by temperature capacity and lifetime of protective coatings for protection against hot corrosion and oxidation and bonding thermal barrier coating TBC on the hot turbine components. The currently used coatings in GT engines were all developed more than 10 years ago and cannot fulfil demands of further turbine development.

On the other hand, they are too expensive due to large amount of the expensive element Re etc. used.

Looking at the recent development of MCrAlX coatings worldwide, all focus on adding a large amount of rear earth elements or precious metals such as Gd, La, Pt etc. in the coatings to achieve a higher temperature capacity and longer lifetime, this trend is conflicting with the dramatic price increase of the elements in the market.

In the MCrAlX coatings available today, one relies on X=Y incorporation very much to have pegging and scavenge effects to increase oxidation and corrosion resistances of the coatings.

However, it has recently been reported that yttrium oxide inclusions in the protective aluminum oxide scale on top of MCrAlY provide fast oxygen diffusion routes, and therefore, accelerate oxidation of the coating (Nijdam TJ, Sloof WG. Acta Materialia 2007;55:5980).

High sulfur (S) content ≥10ppm existed in the current MCrAlY shortens coating lifetime (Smialek JL, Jayne DT, Schaeffer JC, Murphy WH. Thin Solid Films 1994;253:285; and Smialek JL. Metallurgical Transactions A, Physical Metallurgy and Materials Science 1991;22A:739).

This problem has not been solved yet. There is still suffer from technical limitations and dramatic increase in price of rear earth elements.

It is therefore the aim of this invention to overcome these problems.

The problem is solved by an alloy according to claim 1, a powder according to claim 2, a coating according to claim 3 and a component according to claim 4.

In the dependent claims further advantages are listed which can be combined arbitrarily to yield further advantages.

This invention is to solve the problem by using recent research results and upgraded thermodynamic modelling to design an optimized and innovative MCrAlX alloy coating applied by means of thermal spraying in air, vacuum, or protected atmosphere, physical deposition, and plating on Ni or Co based superalloys. M stands for Ni, Co, or both of them and X is a combination of minor elements such as Y, Si, Hf, Ta, Fe, Mo, etc. instead of Y or replacing Y in the current MCrAlY coatings. It means that we will introduce other minor elements to replace part of Y functions in order to keep Y content low. This invention is also to avoid or minimize the use of the expensive elements to still meet the increased demands of today's advanced gas turbines. Introduction of Iron (Fe) is to stabilizes the Al rich phases in the coating and to some extent reduces consumption rate of Al.

Moreover, another approach in designing and manufacturing the innovative MCrAlX coatings is reduce the content of Sulfur (S) to ≤10ppm to further increase coating lifetime.

The new MCrAlX coating is a Ni-based alloy and possesses the following composition (in wt%):
Ni balanced, 24.5%-26.5% Co, 14.5%-16.5%Cr, 11.6%-12.6% Al, 0.3%-0.5% Y, 4.0%-5.0% Fe, 0.4%-0.6Mo, 0.4%-0.6% Si, 0.6%-0.8% Ta.

Especially no Rhenium (Re) or no Ruthenium (Ru) or no Titanium (Ti) or no Columbium (Nb) is added.

Introduction of Iron (Fe) allows to stabilize the Aluminum (Al) rich phases in the microstructure or in the coating and to some extent reduces consumption rate of Aluminum (Al).

Yttrium (Y) is added to the coating to improve the environmental resistance of the alloy. The Yttrium (Y) content can alternatively be increased to a level where a fine dispersion of Yttrium oxide particles can be developed in the vacuum plasma sprayed coating. The particles further aid in strengthening the coating.

Cobalt (Co) contributes to the alloy properties in at least two ways. First, it raises the solvus temperature of the gamma prime phase, permitting higher operating temperatures. Secondly, it improves stability of the gamma phase by inhibiting sigma phase precipitations.

The Chromium (Cr) content of the coating can vary from about 14.5 to about 16,5 percent. If the Chromium (Cr) content is significantly lower, the oxidation and corrosion resistance of the coating is reduced. If the Chromium (Cr) content is higher, there is an increased tendency to form the embrittling sigma phase.

The molybdenum (Mo) aids in solid solution strengthening of the gamma and gamma prime phases.

Tantalum (Ta) partitions to, and reacts to form, the gamma prime phase.

Aluminum (Al) is the primary gamma prime forming element and contributes to oxidation resistance.

Yttrium (Y) is present in the coating in an amount to about 0.5 wt%. Yttrium (Y) in a small amount improves oxidation resistance. If the amount of Yttrium (Y) is above about 0.3wt%, some Yttrium (Y) may oxidize during vacuum plasma spraying to form small Yttrium oxide particles in the coating that improve the strength by dispersion strengthening.

Silicon (Si) increases oxidation and corrosion resistance.

This invention results in MCrAlX coatings with a higher temperature capacity, longer life, and lower cost than the MCrAlX coatings available today.

The coating thickness should be in the range of 30µm - 800µm depending on type of applications and application methods.

This invention results in NiCoCrAlX based coatings with a higher temperature capacity, longer life, and lower cost than the NiCoCrAlX coatings available today.

A powder with this alloy composition can be mixed with a binder and/or refractory metals or ceramics if used as an abrasive coating.

For turbine application especially a metallic substrate like a nickel or cobalt based superalloy is used on which the inventive coating is applied on.

The coating of NiCoCrAlXis applied especially by a thermal spray process, like APS, VPS or HVOF.

Even SLM, SLS or any AM technique is possible to apply coatings or even to produce bulk components of this alloy.

A component at least comprises a metallic substrate, especially a Nickel based superalloy and at least a coating with the inventive alloy and optionally at least one ceramic layer on top of the metallic bond and oxidation coating, preferably with a TGO in between.

The ceramic layer(s) comprises preferably a Zirconia based composition, partly or fully stabilized.

## Claims

1. Nickel-based alloy,
and least comprising (in wt%),
especially consisting of:
| | |
|---|---|
| Cobalt (Co) especially 25.5% | 24.5% - 26.5% |
| Chrome (Cr) especially 15.5% | 14.5% - 16.5%Cr |
| Aluminum (Al) especially 12.1% | 11.6% - 12.6% |
| Yttrium (Y) especially 0.4% | 0.3% - 0.5% |
| Iron (Fe) especially 4.5% | 4.0% - 5.0% |
| Tantalum (Ta) especially 0.7%, | 0.6% - 0.8% |
| Molybdenum (Mo) especially 0.5% | 0.4% - 0.6% |
| Silicon (Si) especially 0.5% | 0.4% - 0.6% |
| Sulfur (S) ≤ | 10ppm, |
especially no Rhenium (Re) or Ruthenium (Ru).

2. Powder,
comprising,
especially consisting of,
an alloy according to claims 1,
optionally comprising a binder and/or hard or ceramic particles.

3. Coating,
having a composition of an alloy according to claim 1, or produced with a powder of claim 2,
especially having a thickness in the range of 30µm to 800µm.

4. Component,
comprising at least
a metallic substrate,
especially Nickel-based or Cobalt-based superalloy,
a metallic coating with a composition according to claim 1, or with a coating according to claim 3,
and optionally
a ceramic coating above the substrate and the metallic coating.

5. Component according to claim 4,
wherein the ceramic layer comprises a Zirconia based composition, partly or fully stabilized.
